# EUROPEAN PATENT SPECIFICATION

(11) **EP 3 513 669 B1**
(45) Date of publication and mention of the grant of the patent: **15.07.2020**
(21) Application number: 18197824.8
(22) Date of filing: 01.10.2018
(51) Int. Cl.: A24F 47/00, H01M 2/10, H01M 2/20, H01M 2/30

(54) **CONDUCTIVE CONTACT STRUCTURE, BATTERY ASSEMBLY AND ELECTRONIC CIGARETTE HAVING SAME**
STRUKTUR EINES LEITFÄHIGEN KONTAKTS, BATTERIEANORDNUNG UND ELEKTRONISCHE ZIGARETTE DAMIT
STRUCTURE DE CONTACT CONDUCTEUR, ENSEMBLE DE BATTERIE ET CIGARETTE ÉLECTRONIQUE EN DISPOSANT

(30) Priority: 19.01.2018 CN 201820100564 U
(43) Date of publication of application: 24.07.2019
(73) Proprietor: Shenzhen IVPS Technology Co., Ltd., 518000 Shenzhen Guangdong (CN)
(72) Inventor: OUYANG, Junwei, Shenzhen, Guangdong 518000 (CN)
(74) Representative: IP-PAL Patent & Trademark Attorneys GmbH

(56) References cited:
- EP-A1- 2 862 459
- CN-U- 206 284 397
- CN-U- 206 612 212
- CN-U- 206 714 076

## Description

### TECHNICAL FIELD

The present disclosure relates to a conductive contact structure, a battery assembly using the conductive contact structure, and an electronic cigarette using the battery assembly.

### BACKGROUND

Electronic cigarettes, also known as electronic cigarettes, are mainly used to quit smoking and replace conventional cigarettes. It has an appearance and taste similar to conventional cigarettes, and even has more tastes than conventional cigarettes. It can generate smoke, a taste and a feel like conventional cigarettes. Without tar, suspension particles and other harmful components in conventional cigarettes, electronic cigarettes have gradually replaced conventional cigarettes in the market. The existing electronic cigarettes supply power to the heat generating unit in the atomizer through the battery assembly, so that the heat generating unit heats the tobacco liquid to generate smoke under the driving of the battery assembly, thereby enabling the user to obtain a smoking experience.

However, in the battery assembly of the conventional electronic cigarette, the conductive contact structure for connecting the atomizer and the battery assembly is complicated in structure and has many components. A gap is easily generated between the components. The user generally always installs the atomizer in the battery assembly in the process of using the electronic cigarette. If an oil leakage preventing structure is weak in the atomizer, the tobacco liquid easily penetrates into the battery assembly from the conductive contact structure, thereby resulting in the phenomenon that the internal electrical components of the battery assembly is damaged.
CN 206 714 076 U relates to an electronic cigarette battery compartment and an electronic cigarette.
EP 2 862 459 A1 relates to an atomizing device comprising an atomizing sleeve, a liquid chamber in the atomizing sleeve, an atomizing assembly, a first connector arranged at one end of the atomizing sleeve.
CN 206 612 212 U relates to an atomization seat, including base, positive pole piece, isolating ring, first sealing washer and second sealing washer.
CN 206 284 397 U relates to an elastic contact structure and an electronic cigarette using the elastic contact structure.

### SUMMARY

The main object of the present disclosure is to provide a conductive contact structure, which aims to improve the sealing performance of the conductive contact structure and prevent the phenomenon that tobacco liquid penetrates into the battery assembly from the conductive contact structure.

In order to achieve the above object, the present disclosure provides a conductive contact structure according to independent claim 1, a battery assembly according to claim 8, and an electronic cigarette according to claim 9. Further improvements are recited in the various dependent claims. The conductive contact structure is suitable to be used in a battery assembly, wherein the battery assembly comprises a cover body and a main body in which a main control board is built, wherein installation space is formed between the cover body and the main body, wherein the conductive contact structure comprises a negative electrode assembly, a sealing member, an insulating assembly and a positive electrode assembly, which are provided in the installation space sequentially, the negative electrode assembly passes through the cover body (50) to abut against the sealing member, and is provided with a through-hole in which an external load is installed, one end of the insulating assembly covers the positive electrode assembly in the main body, and the other end abuts against the sealing member, the positive electrode assembly partially passes through the insulating assembly and the sealing member sequentially, and is received in the through-hole, and the main control board is electrically connected to the positive electrode assembly and the negative electrode assembly.

Preferably, one of the insulating assembly and the sealing member is provided with at least one positioning block, while the other thereof is provided with a positioning groove, one of the positioning blocks is inserted into one of the positioning grooves, and the sealing member is fixed to the insulating assembly.

Preferably, the sealing member comprises a large-diameter section and at least one small-diameter section located at an outer periphery of the large-diameter section, the large-diameter section blocks the through-hole and is provided with a retaining hole through which the positive electrode assembly passes, and the small-diameter section is provided with a positioning groove/positioning block.

Preferably, the retaining hole is aligned with a central position of the through-hole, and the diameter of the retaining hole is smaller than that of the through-hole.

Preferably, the insulating assembly comprises a limiting plate and an insulating plate provided in cooperation with the side structure of the positive electrode assembly, the limiting plate is installed on the main body and forms a receiving groove, one end of the insulating plate covers the receiving groove and the other end is provided with at least one positioning block, one end of the positive electrode assembly is elastically installed on the receiving groove and abuts against the insulating plate, and the other end passes through the insulating plate and the retaining hole and is received in the through-hole.

Preferably, the insulating assembly further comprises an insulating ring, which is sleeved on the outer periphery of the positive electrode assembly in the through-hole and abuts against the inner wall of the through-hole.

Preferably, the negative electrode assembly comprises a connector and a conductive ring, one end of the connector is embedded in the cover body, the other end is received in the installation space, the through-hole is provided at the connector, the conductive ring is sleeved to the connector and abuts against the sealing member, the connector is limited to the installation space, and the conductive ring electrically conducts the connector and the main control board.

Preferably, the positive electrode assembly comprises a conductive column and a conductive elastic piece, one end of the conductive column passes through the insulating assembly and the sealing member and is received in the through-hole, and the other end is fixedly connected to the conductive elastic piece, and the conductive elastic piece is fixedly installed on the main control board and electrically conducts the conductive column and the conductive elastic piece.

The present disclosure further provides a battery assembly, which comprises a cover body, a main body in which a main control board is built, and a conductive contact structure, wherein installation space is formed between the cover body and the main body, the conductive contact structure comprises a negative electrode assembly, a sealing member, an insulating assembly and a positive electrode assembly, which are provided in the installation space sequentially, the negative electrode assembly passes through the cover body (50) to abut against the sealing member, and is provided with a through-hole in which an external load is installed, one end of the insulating assembly covers the positive electrode assembly in the main body, and the other end abuts against the sealing member, the positive electrode assembly partially passes through the insulating assembly and the sealing member sequentially, and is received in the through-hole, and the main control board is electrically connected to the positive electrode assembly and the negative electrode assembly.

The present disclosure further provides an electronic cigarette, wherein the electronic cigarette further comprises a battery assembly, which comprises a cover body, a main body in which a main control board is built, and a conductive contact structure, wherein installation space is formed between the cover body and the main body, the conductive contact structure comprises a negative electrode assembly, a sealing member, an insulating assembly and a positive electrode assembly, which are provided in the installation space sequentially, the negative electrode assembly passes through the cover body (50) to abut against the sealing member, and is provided with a through-hole in which an external load is installed, one end of the insulating assembly covers the positive electrode assembly in the main body, and the other end abuts against the sealing member, the positive electrode assembly partially passes through the insulating assembly and the sealing member sequentially, and is received in the through-hole, and the main control board is electrically connected to the positive electrode assembly and the negative electrode assembly.

The conductive contact structure of the technical solution of the present disclosure can effectively prevent the tobacco liquid from penetrating from the outer periphery of the negative electrode assembly and the gap between the through-hole and the insulating assembly by abutting the negative electrode assembly against the sealing member through the cover body. At the same time, the positive electrode assembly is received in the through-hole after partially passing through the insulating assembly and the sealing member sequentially, that is, the sealing member is sleeved on the positive electrode assembly to further prevent the phenomenon that tobacco liquid penetrates from the direct gap between the positive electrode assembly and the insulating assembly, effectively improve the sealing performance of the conductive contact structure and prevent the phenomenon that tobacco liquid penetrates into the battery assembly from the conductive contact structure.

### BRIEF DESCRIPTION OF THE DRAWINGS

For a better illustration of the embodiments of the present disclosure or the technical solution in the prior art, accompanying drawings needed in the description of the embodiments or the prior art are simply illustrated below. Obviously, the accompanying drawings described below are some embodiments of the present disclosure. For those skilled in the art, other accompanying drawings may be obtained according to the structure shown in these accompanying drawings without creative work.
FIG. 1 is a schematic exploded diagram illustrating a connecting structure of a conductive contact structure installed on a battery assembly according to the present disclosure;
FIG. 2 is a schematic cross-sectional diagram illustrating a connecting structure of a conductive contact structure installed on the battery assembly according to the present disclosure;
FIG. 3 is another schematic cross-sectional diagram illustrating a connecting structure of a conductive contact structure installed on the battery assembly according to the present disclosure;
FIG. 4 is a schematic perspective diagram illustrating a connecting structure of a positive electrode assembly installed on the main body according to the present disclosure;
FIG. 5 is a schematic perspective diagram illustrating a connecting structure of a sealing member according to the present disclosure;
FIG. 6 is a schematic perspective diagram illustrating a connecting structure of a positive electrode assembly according to the present disclosure;
FIG. 7 is a schematic perspective diagram illustrating a connecting structure of a negative electrode assembly installed on the cover body according to the present disclosure.

**Description of the reference numbers:**

| Reference number | Name of part | Reference number | Name of part |
|---|---|---|---|
| 100 | battery assembly | 131 | insulating plate |
| 10 | conductive contact structure | 1311 | positioning block |
| 11 | negative electrode assembly | 132 | insulating ring |
| 111 | connector | 14 | sealing member |
| 1111 | through-hole | 141 | large-diameter section |
| 112 | conductive ring | 1411 | retaining hole |
| 1121 | wiring pin | 142 | small-diameter section |
| 12 | positive electrode assembly | 1421 | positioning groove |
| 121 | conductive column | 30 | main body |
| 1211 | receiving chamber | 31 | limiting plate |
| 122 | conductive elastic piece | 32 | receiving groove |
| 1221 | bending portion | 50 | cover body |
| 123 | elastic piece | 70 | installation space |
| 13 | insulating assembly | 90 | main control board |

The implementation of aims, the function features and the advantages of the present disclosure are described below in further detail in conjunction with embodiments with reference to the drawings.

### DETAILED DESCRIPTION

A clear and complete description as below is provided for the technical solution in the embodiments of the present disclosure in conjunction with the drawings in the embodiments of the present disclosure. Obviously, the embodiments described hereinafter are simply part embodiments of the present disclosure, rather than all the embodiments. Other embodiments obtained by those skilled in the art based on the embodiments in the present disclosure without creative work might be included in the scope of the invention, which is defined in the appended claims.

It should be noted that all directional indications (such as top, bottom, left, right, front, behind...) in the embodiments of the present disclosure are merely to illustrate a relative position relation, a relative motion condition, etc. between each part in a certain state (for example, the state shown in the drawings). If the state changes, the directional indication changes accordingly.

In addition, if terms "first", "second", etc. appear in the present disclosure, they are merely for the purpose of description, but cannot be understood as the indication or implication of relative importance or as the implicit indication of the number of the designated technical features; therefore, features defined by "first" and "second" may specifically or implicitly comprise at least one such feature. In addition, technical solutions of each embodiment of the present disclosure may be combined mutually; however, this must be carried out on the basis that those skilled in the art can implement the combination. When the combination of technical solutions has a conflict or cannot be implemented, it should be considered that such combination of technical solutions does not exist and is not in the scope of protection defined in the appended claims.

In the present disclosure, unless otherwise specifically stated and defined, terms "connected", "fixed", etc. should be interpreted expansively. For example, "fixed" may be fixed connection, detachable connection, or integration; may be mechanical connection or electrical connection; direct connection, indirect connection through an intermediate, or internal communication between two elements or interaction of two elements, unless otherwise specifically defined. Those skilled in the art can understand the specific implication of the above terms in the present disclosure according to specific conditions.

The present disclosure provides a conductive contact structure 10 applied to a battery assembly 100. The battery assembly 100 comprises a cover body 50 and a main body 30 in which a main control board 90 is built. The installation space 70 is formed between the cover body 50 and the main body 30. The battery assembly 100 is used to supply power to an external load. In the embodiment of the present disclosure, for example, the external load is an atomizer. The battery assembly 100 and the atomizer form an electronic cigarette.

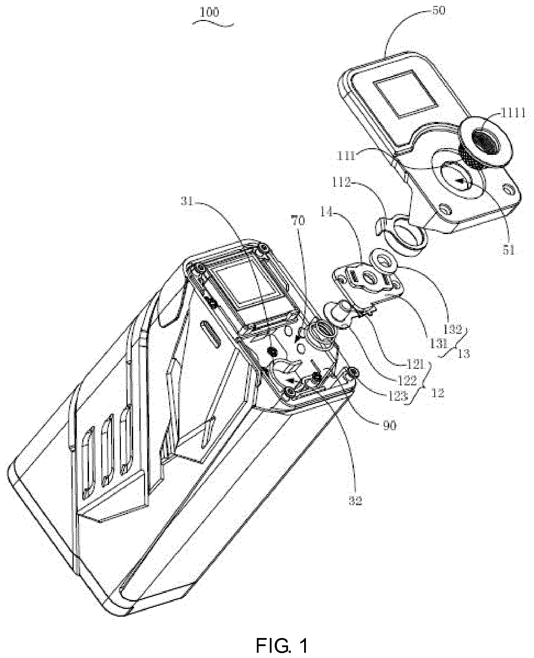

Referring to FIG. 1 to FIG. 7, in the embodiment of the present disclosure, the conductive contact structure 10 comprises a negative electrode assembly 11, a sealing member 14, an insulating assembly 13 and a positive electrode assembly 12, which are provided in the installation space 70 sequentially. The negative electrode assembly 11 passes through the cover body (50) to abut against the sealing member 14, and is provided with a through-hole 1111 in which an external load is installed. One end of the insulating assembly 13 covers the positive electrode assembly 12 in the main body 30, and the other end abuts against the sealing member 14. The positive electrode assembly 12 partially passes through the insulating assembly 13 and the sealing member 14 sequentially, and is received in the through-hole 1111. The main control board 90 is electrically connected to the positive electrode assembly 12 and the negative electrode assembly 11.

The conductive contact structure 10 of the technical solution of the present disclosure can effectively prevent the tobacco liquid from penetrating from the outer periphery of the negative electrode assembly 11 and the gap between the through-hole 1111 and the insulating assembly 13 by abutting the negative electrode assembly 11 against the sealing member 14 through the cover body 50. At the same time, the positive electrode assembly 12 is received in the through-hole 1111 after partially passing through the insulating assembly 13 and the sealing member 14 sequentially, that is, the sealing member 14 is sleeved on the positive electrode assembly 12 to further prevent the phenomenon that tobacco liquid penetrates from the direct gap between the positive electrode assembly 12 and the insulating assembly 13, effectively improve the sealing performance of the conductive contact structure 10 and prevent the phenomenon that tobacco liquid penetrates into the battery assembly 100 from the conductive contact structure 10.

Specifically, as shown in FIG. 1, FIG. 4 and FIG. 5, in the embodiment of the present disclosure, one of the insulating assembly 13 and the sealing member 14 is provided with at least one positioning block 1311, while the other thereof is provided with a positioning groove 1421, one of the positioning blocks 1311 is inserted into one of the positioning grooves 1421, and the sealing member 14 is fixed to the insulating assembly 13. Here, in the embodiment, the sealing member 14 is made of an elastic silicone material. One end of the insulating assembly 13 toward the cover body 50 is provided with two positioning blocks 1311 at intervals. The two positioning blocks 1311 are provided at opposite sides of the positive electrode assembly 12 at intervals. The sealing member 14 is correspondingly provided with two positioning grooves 1421. The sealing member 14 is fixed to the insulating assembly 13 by buckling the two positioning blocks to the two positioning grooves 1421. The connection is stable, facilitating the installation of the sealing member 14, and at the same time, effectively preventing the phenomenon that the sealing member 14 moves during use so as to generate a gap. Moreover, the elastic silicone material has a certain elastic force, and can be closely fit with the insulating assembly 13 and the negative electrode assembly 11 to further avoid a gap.

It is to be understood that, in the actual application process, the number and the installing position of the positioning blocks 1311 and the positioning grooves 1421 are not limited to the manner in which the positioning blocks 1311 and the positioning grooves 1421 are provided at opposite sides of the positive electrode assembly 12 at intervals in the above embodiment. The manner in which the user may select other numbers and installing positions according to the specific size or shape also falls within the scope of protection of the present disclosure.

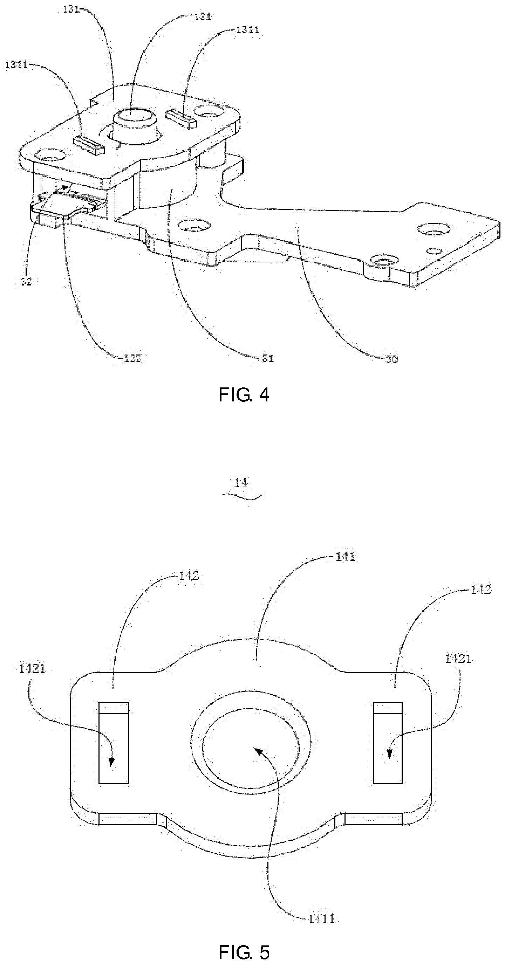

Specifically, as shown in FIG. 5, in the embodiment of the present disclosure, the sealing member 14 comprises a large-diameter section 141 and at least one small-diameter section 142 located at an outer periphery of the large-diameter section 141. The large-diameter section 141 blocks the through-hole 1111 and is provided with a retaining hole 1411 through which the positive electrode assembly 12 passes, and the small-diameter section 142 is provided with a positioning groove 1421/positioning block 1311. Here, in the embodiment, two small-diameter sections 142 are provided at both sides of the large-diameter section 141. The large-diameter section 141 blocks the through-hole 1111, thereby effectively preventing oil from penetrating from the through-hole 1111. The two small-diameter sections 142 are integrally formed with the large diameter section 141, and two positioning grooves 1421 are sleeved on the two positioning blocks 1311 provided by the insulating assembly 13, preventing the one-piece sealing member 14 with a large diameter from sealing, effectively saving the material cost, and reducing the installation space 70 at the same time.

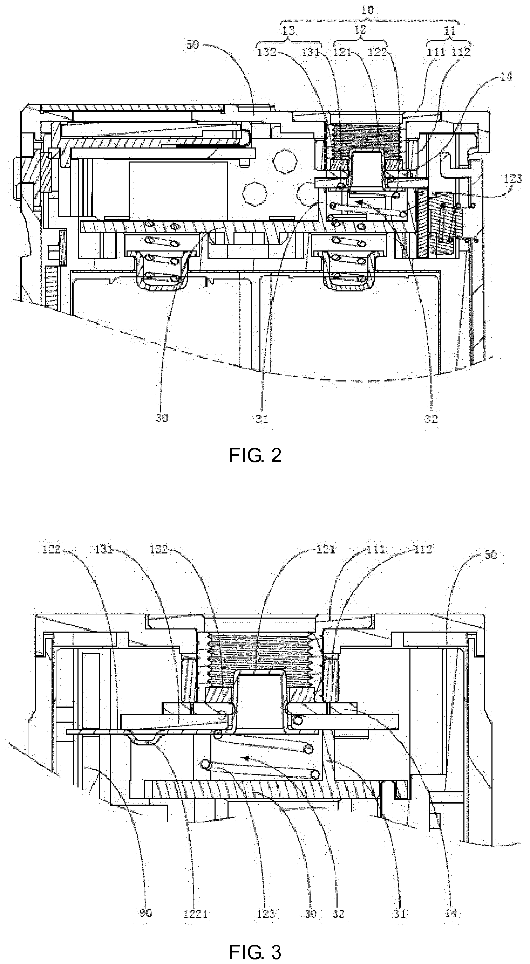

Specifically, as shown in FIG. 2 or FIG. 3, the retaining hole 1411 is aligned with a central position of the through-hole 1111, and the diameter of the retaining hole 1411 is smaller than that of the through-hole 1111. Here, in the embodiment, the retaining hole 1411 is aligned with a central position of the through-hole 1111, and the diameter of the retaining hole 1411 is smaller than that of the through-hole 1111 so as to effectively ensure that the positive electrode assembly 12 is received in the center of the through-hole 1111 and always maintains a certain distance from the negative electrode assembly 11 to prevent the safety hazard that the positive electrode assembly 12 and the negative electrode assembly 11 are in direct contact to cause a short circuit.

Specifically, as shown in FIG. 1 to FIG. 4, in the embodiment of the present disclosure, the insulating assembly 13 comprises a limiting plate 31 and an insulating plate 131 provided in cooperation with the side structure of the positive electrode assembly 12. The limiting plate 31 is installed on the main body 30 and forms a receiving groove 32. One end of the insulating plate 131 covers the receiving groove 32 and the other end is provided with at least one positioning block 1311. One end of the positive electrode assembly 12 is elastically installed on the receiving groove 32 and abuts against the insulating plate 131, and the other end passes through the insulating plate 131 and the retaining hole 1411 and is received in the through-hole 1111. Here, in the embodiment, the limiting plate 31 forms a receiving groove 32, one end of the positive electrode assembly 12 is elastically installed on the receiving groove 32, the insulating plate 131 covers the receiving groove 32, and the positive electrode assembly 12 is covered on the main body 30, so that the outer periphery of the positive electrode assembly 12 is wrapped, which can effectively prevent the phenomenon that the external conductive element (not shown) accidentally touches the positive electrode assembly 12 to cause a short circuit, prevent the phenomenon that the positive electrode assembly 12 shakes during use so as to be in contact with the negative electrode assembly 11 to cause a short circuit, and effectively improve the yield and safety of the battery assembly 100.

Specifically, as shown in FIG. 1 to FIG. 3 or FIG. 7, in the embodiment of the present disclosure, the insulating assembly 13 further comprises an insulating ring 132, which is sleeved on the outer periphery of the positive electrode assembly 12 in the through-hole 1111 and abuts against the inner wall of the through-hole 1111. Here, in the embodiment, since the sealing member 14 is made of an elastic silicone material and has a soft texture, in order to prevent the phenomenon that the positive electrode assembly 12 is in direct contact with the negative electrode assembly 11 to cause a short circuit in a long-term use, an insulating ring 132 is sleeved on the outer periphery of the positive electrode assembly 12 in the through-hole 1111, and the end of the negative electrode assembly 11 near the positive electrode assembly 12 gradually increases or is provided with a limiting step so as to adapt to and abut against the insulating ring 132 so that the positive electrode assembly 12 and the negative electrode assembly 11 are not in direct contact with each other to cause a short circuit.

Specifically, as shown in FIG. 1 to FIG. 3 or FIG. 7, in the embodiment of the present disclosure, the negative electrode assembly 11 comprises a connector 111 and a conductive ring 112. One end of the connector 111 is embedded in the cover body 50, and the other end is received in the installation space 70. The through-hole 1111 is provided at the connector 111. The conductive ring 112 is sleeved to the connector 111 and abuts against the sealing member 14. The connector 111 is limited to the installation space 70, and the conductive ring 112 electrically conducts the connector 111 and the main control board 90. Here, in the embodiment, one end of the connector 111 is embedded in the cover body 50, the other end is received in the installation space 70, and the conductive ring 112 is sleeved to the connector 111 using an interference fit and abuts against the sealing member 14 so as to effectively prevent the tobacco liquid from penetrating from the gap between the conductive ring 112 and the insulating assembly 13, and fix the connector 111 to the cover body 50 simultaneously. The connection is stable without using screws. The contact electrode of the external load is fixedly electrically connected to the connector 111 through the through-hole 1111 at the same time, and the conductive contact area is large, thereby effectively ensuring the stability of electrical conduction and avoiding the burning sensation when a large current passes.

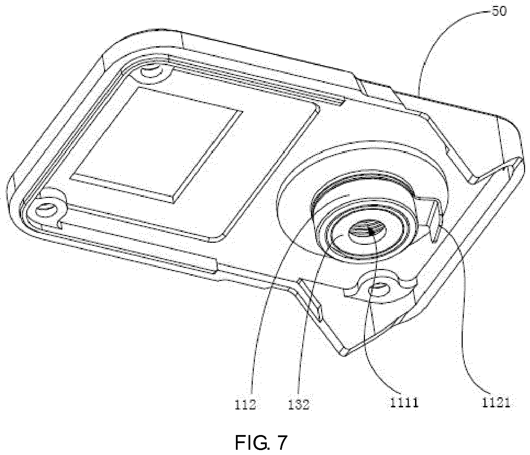

Specifically, as shown in FIG. 7, in the embodiment of the present disclosure, the outer periphery of the conductive ring 112 extends with a wiring pin 1121 which is provided with a wire hole. A wire is soldered to the wiring pin 1121 through the wire hole to realize electrical conduction and effectively facilitate wiring welding in a small space.

Specifically, as shown in FIG. 1 to FIG. 3, in the embodiment of the present disclosure, the inner wall of the through-hole 1111 is provided with a connecting thread (not shown) to be connected with the contact electrode of the load. Here, in the embodiment, the connecting thread is connected to the contact electrode of the load, which facilitates the installation and disassembly. At the same time, the connection is more stable and less likely to cause a shake.

Specifically, as shown in FIG. 3 or FIG. 4, in the embodiment of the present disclosure, the positive electrode assembly 12 comprises a conductive column 121 and a conductive elastic piece 122. One end of the conductive column 121 passes through the insulating assembly 13 and the sealing member 14 and is received in the through-hole 1111, and the other end is fixedly connected to the conductive elastic piece 122. The conductive elastic piece 122 is fixedly installed on the main control board 90 and electrically conducts the conductive column 121 and the conductive elastic piece 122. Here, in the embodiment, the conductive column 121 passes through the insulating plate 131 of the insulating assembly 13 and the sealing member 14 sequentially and is received in the connecting hole, so that the conductive column 121 always maintains a certain distance from the negative electrode assembly 11. When the load is installed on the conductive assembly, the negative contact electrode at the outer periphery of the load is electrically connected to the connector 111 of the negative electrode assembly 11, and the positive contact electrode of the load abuts against the conductive column 121 to form an electrical circuit; at the same time, the positive electrode assembly 12 is provided with a conductive elastic piece 122 so that the positive electrode assembly 12 can be welded to the main control board 90 through the conductive elastic piece 122 to be electrically connected, thereby avoiding the connection using a wire, further improving the product quality and reducing the safety hazard such as the wire cold solder joint detachment. At the same time, wires are directly distributed on the main control board 90 to be electrically connected to the wiring pin 1121, the contact area is much larger than that when a wire is used for connection, and a load with a large current may be withstood. Moreover, the conductive elastic piece 122 has a certain elastic force. When the load is installed, the conductive column 121 is squeezed, and the conductive elastic piece 122 applies a certain elastic force to the conductive column 121, so that the conductive column 121 abuts against the positive contact electrode of the load, effectively improving the stability of the current conduction.

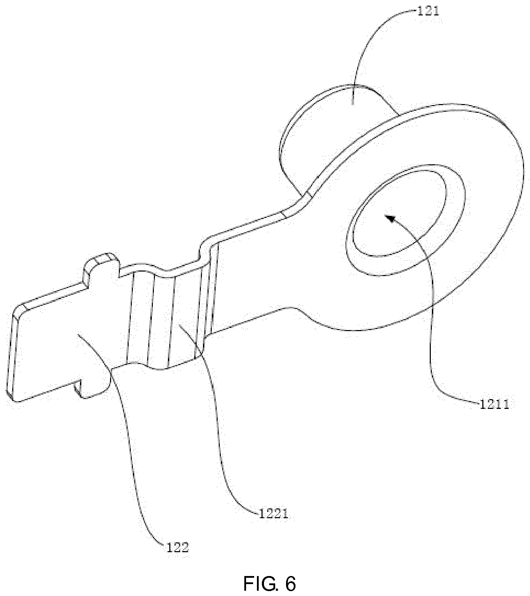

Specifically, as shown in FIG. 3 or FIG. 6, in the actual application process, in the technical application of the embodiment, a bending portion 1221 is provided on the conductive elastic piece 122 to further improve the elastic force of the conductive elastic piece 122.

Specifically, as shown in FIG. 1 to FIG. 3, in the embodiment of the present disclosure, the positive electrode assembly 12 further comprises an elastic member 123. The two ends of the elastic member 123 abut against the main body 30 and the conductive column 121, respectively. Here, in the embodiment, the elastic member 123 is provided in the receiving groove 32 to further improve the elastic force of the conductive column 121, so that the conductive column 121 can be closely fit with the positive contact electrode of the load, and at the same time, the activity of the conductive column 121 can be improved, to facilitate interfacing with various types of loads.

Specifically, as shown in FIG. 2, FIG. 3 or FIG. 6, in the embodiment of the present disclosure, the inner groove wall of the receiving groove 32 is further provided with an elastic member fixing column (not shown) toward the positive electrode assembly 12; or/and the conductive column 121 is provided with a receiving chamber 1211 for receiving the elastic member 123. Here, in the embodiment, an elastic member fixing column is provided, and then the elastic member 123 is sleeved to the elastic member fixing column, so that the phenomenon that the elastic member 123 shakes and displaces during use can be effectively prevented. Similarly, the receiving chamber 1211 for receiving the elastic member 123 is provided in the conductive column 121, so that the phenomenon that the elastic member 123 shakes and displaces during use can be effectively prevented, and at the same time, the structure is more compact and the installation space 70 is reduced.

It is to be understood that, in the actual application process, the elastic member 123 may use a compression spring or an elastic plastic, and is not limited to the above manner in which an elastic member fixing column or a receiving chamber 1211 is provided. For example, a conical spring may also be used. The manner in which the large-diameter end of the conical spring abuts against the limiting plate 31 so as to be fixed also falls within the scope of protection of the present disclosure.

Referring to FIG. 1, the present disclosure further provides a battery assembly 100 applied to the electronic cigarette, wherein the battery assembly 100 comprises a cover body 50, a main body 30 in which a main control board 90 is built, and a conductive contact structure 10. Refer to the above embodiment for the specific structure of the conductive contact structure 10. Due to the use of all the technical solutions of all the above embodiments, the battery assembly 100 has at least all the beneficial effects brought by the technical solutions of the above embodiments, which will not be described in detail herein.

The present disclosure further provides an electronic cigarette which comprises an atomizer and a battery assembly 100. Refer to the above embodiment for the specific structure of the battery assembly 100. Due to the use of all the technical solutions of all the above embodiments, the electronic cigarette has at least all the beneficial effects brought by the technical solutions of the above embodiments, which will not be described in detail herein.

The above are preferred embodiments of the present disclosure merely and are not intended to limit the scope of the invention, which is defined by the appended claims.

## Claims

1. A conductive contact structure suitable to be used in a battery assembly (100), wherein the battery assembly (100) comprises a cover body (50) and a main body (30) in which a main control board (90) is built, wherein an installation space (70) is formed between the cover body (50) and the main body (30), wherein the conductive contact structure (10) comprises a negative electrode assembly (11), a sealing member (14), an insulating assembly (13) and a positive electrode assembly (12), which are provided in the installation space (70) sequentially, the negative electrode assembly (11) passes through the cover body (50) to abut against the sealing member (14), the negative electrode assembly (11) is provided with a through-hole (1111) in which an external load is installed, one end of the insulating assembly (13) covers the positive electrode assembly (12) in the main body (30), and the other end abuts against the sealing member (14), the positive electrode assembly (12) partially passes through the insulating assembly (13) and the sealing member (14) sequentially, the positive electrode assembly (12) is received in the through-hole (1111), and the main control board (90) is electrically connected to the positive electrode assembly (12) and the negative electrode assembly (11);
**characterized in that** one of the insulating assembly (13) and the sealing member (14) is provided with at least one positioning block (1311), while the other thereof is provided with a positioning groove (1421), one of the positioning blocks (1311) is inserted into one of the positioning grooves (1421), and the sealing member (14) is fixed to the insulating assembly (13).

2. The conductive contact structure according to claim 1, wherein the sealing member (14) comprises a large-diameter section (141) and at least one small-diameter section (142) located at an outer periphery of the large-diameter section (141), the large-diameter section (141) blocks the through-hole (1111) and is provided with a retaining hole (1411) through which the positive electrode assembly (12) passes, and the small-diameter section (142) is provided with a positioning groove (1421)/a positioning block (1311).

3. The conductive contact structure according to claim 2, wherein the retaining hole (1411) is aligned with a central position of the through-hole (1111), and the diameter of the retaining hole (1411) is smaller than that of the through hole (1111).

4. The conductive contact structure according to claim 2, wherein the insulating assembly (13) comprises a limiting plate (31) and an insulating plate (131) provided in cooperation with the side structure of the positive electrode assembly (12), the limiting plate (31) is installed on the main body (30) and forms a receiving groove (32), one end of the insulating plate (131) covers the receiving groove (32) and the other end is provided with at least one positioning block (1311), one end of the positive electrode assembly (12) is elastically installed in the receiving groove (32) and abuts against the insulating plate (131), and the other end passes through the insulating plate (131) and the retaining hole (1411), and is received in the through-hole (1111).

5. The conductive contact structure according to claim 4, wherein the insulating assembly (13) further comprises an insulating ring (132), which is sleeved on the outer periphery of the positive electrode assembly (12) in the through-hole (1111) and abuts against the inner wall of the through-hole (1111).

6. The conductive contact structure according to any one of claims 1 to 5, wherein the negative electrode assembly (11) comprises a connector (111) and a conductive ring (112), one end of the connector (111) is embedded in the insulating plate (131), the other end is received in the installation space (70), the through-hole (1111) is defined in the connector (111), the conductive ring (112) sleeves the connector (111) and abuts against the sealing member (14), the connector (111) is limited to the installation space (70), and the conductive ring (112) electrically conducts the connector (111) and the main control board (90).

7. The conductive contact structure according to any one of claims 1 to 5, wherein the positive electrode assembly (12) comprises a conductive column (121) and a conductive elastic piece (122), one end of the conductive column (121) passes through the insulating assembly (13) and the sealing member (14) and is received in the through-hole (1111), and the other end is fixedly connected to the conductive elastic piece (122), and the conductive elastic piece (122) is fixedly installed on the main control board (90) and electrically conducts the conductive column (121) and the conductive elastic piece (122).

8. A battery assembly, wherein the battery assembly (100) comprises the conductive contact structure (10) according to any one of claims 1 to 7.

9. An electronic cigarette comprising an atomizer, wherein the electronic cigarette further comprises the battery assembly (100) according to claim 8.

## Patentansprüche

1. Leitende Kontaktstruktur, die auf eine Batterieanordnung (100) aufgebracht ist, wobei die Batterieanordnung (100) einen Abdeckkörper (50) und einen Hauptkörper (30) umfasst, in dem eine Hauptsteuerkarte (90) eingebaut ist, wobei ein Installationsraum (70) zwischen dem Abdeckkörper (50) und dem Hauptkörper (30) ausgebildet ist, wobei die leitende Kontaktstruktur (10) eine negative Elektrodenanordnung (11), ein Dichtungselement (14), eine isolierende Anordnung (13) und eine positive Elektrodenanordnung (12) umfasst, die nacheinander in dem Installationsraum (70) vorgesehen sind, wobei die negative Elektrodenanordnung (11) durch den Abdeckkörper (50) verläuft, um gegen das Dichtungselement (14) anzuliegen, wobei die negative Elektrodenanordnung (11) mit einem Durchgangsloch (1111) versehen ist, in das eine externe Last eingebaut ist, ein Ende der Isolieranordnung (13) bedeckt die positive Elektrodenanordnung (12) im Hauptkörper (30) und das andere Ende liegt an dem Dichtungselement (14) an, die positive Elektrodenanordnung (12) verläuft nacheinander teilweise durch die Isolieranordnung (13) und das Dichtungselement (14), die positive Elektrodenanordnung (12) ist in das Durchgangsloch (1111) aufgenommen und die Hauptsteuerkarte (90) ist elektrisch mit der positiven Elektrodenanordnung (12) und der negativen Elektrodenbaugruppe (11) verbunden;
**dadurch gekennzeichnet, dass**
eine der Isolieranordnungen (13) und das Dichtungselement (14) mit mindestens einem Positionierblock (1311) versehen sind, während die andere davon mit einer Positioniernut (1421) versehen ist, wobei einer der Positionierblöcke (1311) in eine der Positionierungsnuten (1421) eingeführt sind und das Dichtungselement (14) an der Isolieranordnung (13) befestigt ist.

2. Leitfähige Kontaktstruktur nach Anspruch 1, wobei das Dichtungselement (14) einen Abschnitt mit großem Durchmesser (141) und mindestens einen Abschnitt mit kleinem Durchmesser (142) umfasst, der an einem Außenumfang des Abschnitts mit großem Durchmesser (141) angeordnet ist, der Abschnitt (141) mit großem Durchmesser blockiert das Durchgangsloch (1111) und ist mit einem Halteloch (1411) versehen, durch das die positive Elektrodenanordnung (12) verläuft, und der Abschnitt (142) mit kleinem Durchmesser ist mit einer Positioniernut (1421)/einem Positionierblock (1311) versehen.

3. Leitfähige Kontaktstruktur nach Anspruch 2, wobei das Halteloch (1411) mit einer zentralen Position des Durchgangslochs (1111) ausgerichtet ist und der Durchmesser des Haltelochs (1411) kleiner als der des Durchgangslochs (1111) ist.

4. Leitfähige Kontaktstruktur nach Anspruch 2, wobei die Isolieranordnung (13) eine Begrenzungsplatte (31) und eine Isolierplatte (131) umfasst, die in Zusammenwirkung mit der Seitenstruktur der positiven Elektrodenanordnung (12) vorgesehen ist, die Begrenzungsplatte (31) ist am Hauptkörper (30) installiert und bildet eine Aufnahmerille (32) aus, ein Ende der Isolierplatte (131) bedeckt die Aufnahmerille (32) und das andere Ende ist mit mindestens einem Positionierblock (1311) versehen, ein Ende der positiven Elektrodenanordnung (12) ist elastisch in der Aufnahmerille (32) installiert und liegt an der Isolierplatte (131) an, und das andere Ende verläuft durch die Isolierplatte (131) und das Halteloch (1411) und ist im Durchgangsloch (1111) aufgenommen.

5. Leitfähige Kontaktstruktur nach Anspruch 4, wobei die Isolieranordnung (13) ferner einen Isolierring (132) umfasst, der am Außenumfang der positiven Elektrodenanordnung (12) in das Durchgangsloch (1111) eingehüllt ist und an der Innenwand des Durchgangslochs (1111) anliegt.

6. Leitfähige Kontaktstruktur nach einem der Ansprüche 1 bis 5, wobei die negative Elektrodenanordnung (11) einen Verbinder (111) und einen leitenden Ring (112) umfasst, wobei ein Ende des Verbinders (111) in die Isolierplatte eingebettet ist (131) ist, das andere Ende im Installationsraum (70) aufgenommen ist, das Durchgangsloch (1111) im Verbinder (111) definiert ist, der Leitungsring (112) hüllt den Verbinder (111) ein und liegt an dem Dichtungselement (14) an, der Verbinder (111) ist auf den Installationsraum (70) begrenzt, und der leitende Ring (112) verbindet den Verbinder (111) und die Hauptsteuerplatine (90) elektrisch.

7. Leitfähige Kontaktstruktur nach einem der Ansprüche 1 bis 5, wobei die positive Elektrodenanordnung (12) eine leitende Säule (121) und ein leitendes elastisches Stück (122) umfasst, wobei ein Ende der leitenden Säule (121) durch die Isolieranordnung (13) und das Dichtungselement (14) hindurch geht und in dem Durchgangsloch (1111) aufgenommen ist, und das andere Ende ist fest mit dem leitenden elastischen Stück (122) verbunden, und das leitende elastische Stück (122) ist fest auf der Hauptsteuerkarte (90) installiert und verbindet die leitende Säule (121) und das leitende elastische Teil (122) elektrisch.

8. Batterieanordnung, wobei die Batterieanordnung (100) die leitende Kontaktstruktur (10) gemäß einem der Ansprüche 1 bis 7 umfasst.

9. Elektrische Zigarette, umfassend einen Zerstäuber, wobei die elektrische Zigarette ferner die Batterieanordnung (100) gemäß Anspruch 8 umfasst.

## Revendications

1. Structure de contact conductrice adaptée à être utilisée dans un ensemble batterie (100), dans laquelle l'ensemble batterie (100) comprend un corps de couvercle (50) et un corps principal (30) dans laquelle une carte de commande principale (90) est construite, dans laquelle un espace d'installation (70) est formé entre le corps de couvercle (50) et le corps principal (30), dans laquelle la structure de contact conductrice (10) comprend un ensemble électrode négative (11), un élément d'étanchéité (14), un ensemble isolant (13) et un ensemble électrode positive (12), qui sont fournis dans l'espace d'installation (70) en séquence, l'ensemble électrode négative (11) traverse le corps de couvercle (50) pour venir en butée contre l'élément d'étanchéité (14), l'ensemble électrode négative (11) est pourvu d'un trou traversant (1111) dans laquelle une charge externe est installée, une extrémité de l'ensemble isolant (13) couvre l'ensemble électrode positive (12) dans le corps principal (30) et l'autre extrémité vient en butée contre l'élément d'étanchéité (14), l'ensemble électrode positive (12) traverse partiellement l'ensemble isolant (13) et l'élément d'étanchéité (14) en séquence, l'ensemble électrode positive (12) est reçu dans le trou traversant (1111) et la carte de commande principale (90) est connectée électriquement à l'ensemble électrode positive (12) et l'ensemble électrode négative (11) ;
**caractérisée en ce que** l'un parmi l'ensemble isolant (13) et l'élément d'étanchéité (14) est pourvu d'au moins un bloc de positionnement (1311), pendant que l'autre de ceux-ci est pourvu d'une rainure de positionnement (1421), l'un des blocs de positionnement (1311) est inséré dans l'une des rainures de positionnement (1421) et l'élément d'étanchéité (14) est fixé à l'ensemble isolant (13).

2. Structure de contact conductrice selon la revendication 1,
dans laquelle l'élément d'étanchéité (14) comprend une section de grand diamètre (141) et au moins une section de petit diamètre (142) situées à une périphérie extérieure de la section de grand diamètre (141), la section de grand diamètre (141) bloque le trou traversant (1111) et est pourvue d'un trou de retenue (1411) à travers lequel l'ensemble électrode positive (12) passe et la section de petit diamètre (142) est pourvue d'une rainure de positionnement (1421) / un bloc de positionnement (1311).

3. Structure de contact conductrice selon la revendication 2, dans laquelle le trou de retenue (1411) est aligné avec une position centrale du trou traversant (1111) et le diamètre du trou de retenue (1411) est plus petit que celui du trou traversant (1111).

4. Structure de contact conductrice selon la revendication 2, dans laquelle l'ensemble isolant (13) comprend une plaque limitante (31) et une plaque isolante (131) fournies en collaboration avec la structure latérale de l'ensemble électrode positive (12), la plaque limitante (31) est installée sur le corps principal (30) et forme une rainure de réception (32), une extrémité de la plaque isolante (131) couvre la rainure de réception (32) et l'autre extrémité est pourvue d'au moins un bloc de positionnement (1311), une extrémité de l'ensemble électrode positive (12) est installée dans la rainure de réception de façon élastique (32) et vient en butée contre la plaque isolante (131) et l'autre extrémité passe à travers la plaque isolante (131) et le trou de retenue (1411) et est reçue dans le trou traversant (1111).

5. Structure de contact conductrice selon la revendication 4, dans laquelle l'ensemble isolant (13) comprend en outre une bague isolante (132), qui est manchonnée sur la périphérie extérieure de l'ensemble électrode positive (12) dans le trou traversant (1111) et vient en butée contre la paroi intérieure du trou traversant (1111).

6. Structure de contact conductrice selon l'une quelconque des revendications 1 à 5, dans laquelle l'ensemble électrode négative (11) comprend un connecteur (111) et une bague conductrice (112), une extrémité du connecteur (111) est intégrée dans la plaque isolante (131), l'autre extrémité est reçue dans l'espace d'installation (70), le trou traversant (1111) est défini dans le connecteur (111), la bague conductrice (112) manchonne le connecteur (111) et vient en butée contre l'élément d'étanchéité (14), le connecteur (111) est limité à l'espace d'installation (70) et la bague conductrice (112) conduit électriquement le connecteur (111) et la carte de commande principale (90).

7. Structure de contact conductrice selon l'une quelconque des revendications 1 à 5, dans laquelle l'ensemble électrode positive (12) comprend une colonne conductrice (121) et une pièce élastique conductrice (122), une extrémité de la colonne conductrice (121) passe à travers l'ensemble isolant (13) et l'élément d'étanchéité (14) et est reçue dans le trou traversant (1111) et l'autre extrémité est connectée à demeure à la pièce élastique conductrice (122) et la pièce élastique conductrice (122) est installée à demeure sur la carte de commande principale (90) et conduit électriquement la colonne conductrice (121) et la pièce élastique conductrice (122).

8. Ensemble batterie, dans laquelle l'ensemble batterie (100) comprend la structure de contact conductrice (10) selon l'une quelconque des revendications 1 à 7.

9. Cigarette électronique comprenant un atomiseur, dans laquelle la cigarette électronique comprend en outre l'ensemble batterie (100) selon la revendication 8.
